# EUROPÄISCHE PATENTSCHRIFT

(11) **EP 1 247 499 B1**
(45) Veröffentlichungstag und Bekanntmachung des Hinweises auf die Patenterteilung: **29.06.2005**
(21) Anmeldenummer: 01108343.3
(22) Anmeldetag: 03.04.2001
(51) Int. Cl.: A61C 17/34

(54) **Elektrische Zahnbürste**
Electric toothbrush
Brosse à dents électrique

(43) Veröffentlichungstag der Anmeldung: 09.10.2002
(73) Patentinhaber: WIK Far East Ltd., North Point, Hong Kong (CN)
(72) Erfinder: Hafemann, Klaus., D-45359 Essen (DE)
(74) Vertreter: Schröter & Haverkamp

(56) Entgegenhaltungen:
- DE-A- 3 931 982
- US-A- 5 504 958
- US-A- 5 862 558

## Beschreibung

Die Erfindung betrifft eine elektrische Zahnbürste mit einem drehbar gelagerten, über einen Schaft mit einem Griffstück verbundenen Bürstenkopf.

Elektrische Zahnbürsten umfassen ein Griffstück, in dem als Antriebseinheit ein Elektromotor sowie als Spannungsquelle eine Batterie, gegebenenfalls wiederaufladbar enthalten sind. Elektrische Schalter an der Oberfläche des Griffstückes dienen zum ein- und ausschalten des Elektromotors. An das Griffstück grenzt ein Schaft, an dessen freiem Ende drehbar gelagert ein Bürstenkopf angeordnet ist. In dem Schaft enthalten ist das Antriebsgestänge, mit dem der Bürstenkopf in seine Drehbewegung versetzt wird.

Bei vorbekannten elektrischen Zahnbürsten ist der Bürstenkopf üblicherweise drehbar um eine Drehachse senkrecht zu der durch die Ebene der Borstenenden gebildeten Reinigungsebene gelagert. Dabei kann vorgesehen sein, daß der Bürstenkopf in eine oszillierende Drehbewegung versetzt wird, durch die der Bürstenkopf um einen vorbestimmten Winkelbetrag, beispielsweise 70° in die eine und anschließend in die entgegengesetzte Richtung gedreht wird. Bei wiederum anderen elektrischen Zahnbürsten rotiert der Bürstenkopf um seine rechtwinklig zu der zu der Ebene der Borstenenden verlaufenden Drehachse. Beiden Bürstenkopfbewegungen gemein ist, daß die Borsten ungleichmäßig bewegt werden, da die inneren, in unmittelbarer Nähe der Drehachse befindlichen Borsten bei der Drehbewegung nur eine geringe und die äußeren, entfernter von der Drehachse befindlichen Borsten eine sehr viel größere Strecke zurücklegen. Die Reinigungswirkung eines solchen Bürstenkopfes ist daher in seinen äußeren Bereichen erheblich höher als in den innenliegenden Borstenbereichen. Um über die gesamte Zahnfläche eine im wesentlichen einheitliche Reinigungswirkung zu erzielen, muß die Zahnbürste möglichst gleichmäßig über die Zähne hinweg bewegt werden.

Bei Zahnbürsten, deren Bürstenkopf zum Ausüben einer oszillierenden Drehbewegung angetrieben ist, ist die Ausbeute der durch eine Batterie zur Verfügung gestellten Energie geringer als bei einer solchen Zahnbürste, deren Bürstenkopf eine rotatorische Drehbewegung ausübt, da durch die regelmäßige Bewegungsumkehr Totpunkte überwunden werden müssen und dieses energiezährend ist.

Bei Vorsehen einer elektrischen Zahnbürste mit einem Bürstenkopf, die eine rotatorische Drehbewegung, nämlich um die senkrecht zur Ebene der Borstenenden befindliche Drehachse ausübt, können aufgrund der Gleichmäßigkeit der Bewegung aus dem Gebiß zu entfernende Partikel nur schwer abgeführt werden. Vielmehr drücken sich derartige Partikel, beispielsweise Essensreste in die Borsten ein. Bei den Bürstenköpfen mit oszillierender Drehbewegung können derartige Partikel durch das ständige Hin- und Herdrehen des Bürstenkopfes weggeschleudert bzw. ausgespült werden.

DE 39 31 982 A1 offenbart eine elektrische Zahnbürste, die sich ihrerseits gegenüber einem Stand der Technik abhebt, deren Bürstenkopf eine oszillierende Bewegung in einer Kreisabschnittsbewegung am Zahn und am Zahnfleisch ausführt. Um ein verbessertes Reinigungsergebnis zu erzielen ist der Bürstenkopf in einer Art und Weise gelagert, dass dieses um einen Kreisausschnitt bewegt wird. Der aus der DE 39 31 982 A1 vorbekannte Bürstenkopf wird somit quasi oszillierend um eine parallel zum Schaft der Zahnbürste verlaufende Achse zum Ausüben einer Schwenk-HubBewegung angetrieben. Als Antrieb dient ein Exzenterantrieb. Der Bürstenkopf ist mittels zwei in jeweils ein Lager eingreifenden Führungsstiften in seiner Bewegung geführt. Die Führungsstifte sind symmetrisch zu der Drehachse der Antriebswelle angeordnet und dienen dem Zweck, den Bürstenkopf in die gewünschte oszillierende Schwenkbewegung zu bringen. Dabei ist vorgesehen, dass die Lager, in die die Führungsstifte eingreifen als Loslager mit einem Freiheitsgrad ausgebildet sind, so dass der Bürstenkopf bei seiner Rückbewegung gegenüber der Hinbewegung etwas angehoben ist (Hubbewegung). Damit soll erreicht werden, dass die zu reinigenden Zähne vom Zahnfleisch weg in eine Richtung durch die Borstenbüschel gereinigt werden können.

US 5 504 958 A offenbart eine elektrische Zahnbürste, deren Bürstenkopf aus mehrere einzelnen Bürstenkopfsegmenten besteht, die jeweils gegenläufig zueinander angetrieben sind. Jedes Bürstenkopfsegment verfügt über einen Führungsstift, der in dem jeweilig benachbarten Bürstenkopfsegment gelagert ist. Die Enden der Borsten eines Bürstenkopfsegmentes werden dergestalt bewegt, dass die einen außen liegenden Borsten eine oszillierende wischende Bewegung ausüben, während die gegenüberliegenden anderen außen liegenden Borsten auf einem Kreisbahnausschnitt bewegt werden. Um diese ungleiche Bewegung eines Bürstenkopfsegmentes über die Längserstreckung des Bürstenkopfes hinweg auszugleichen, sind die mehreren Bürstenkopfsegmente vorgesehen, die jeweils gegenläufig gelagert sind, so dass benachbart zu denjenigen Borsten des einen Bürstenkopfsegmentes, die die oszillierende wischende Bewegung ausüben, die Borsten des benachbarten Bürstenkopfsegmentes die Kreisbahnbewegung ausüben.

Ausgehend von dem oben diskutierten Stand der Technik liegt der Erfindung die Aufgabe zugrunde, eine eingangs genannte gattungsgemäße elektrische Zahnbürste bereitzustellen, die nicht nur eine hohe Ausbeute der zur Verfügung stehenden Energie gewährleistet, sondern mit der auch ein gleichmäßigeres und somit verbessertes Putzergebnis erzielt werden kann.

Diese Aufgabe wird erfindungsgemäß dadurch gelöst, daß der Bürstenkopf dergestalt gelagert ist, daß dieser bei einem Antrieb eine rotatorische Drehbewegung entlang einer Kreisbahn ausführt, wobei die Drehachse des Bürstenkopfes im wesentlichen parallel zur Ebene der Borstenenden des Bürstenkopfes verlaufend angeordnet ist und die Ebene der Borstenenden infolge der Lagerung des Bürstenkopfes bei der rotatorischen Drehbewegung ihre Ausrichtung beibehält.

Bei der erfindungsgemäßen elektrischen Zahnbürste ist der Bürstenkopf im Gegensatz zum vorbekannten Stand der Technik nicht in einer Art und Weise gelagert, daß die Ebene der Borstenenden unverändert verbleibt, sondern daß der Bürstenkopf eine rotatorische Drehbewegung bei einem Antrieb ausführt, in der die durch die Borstenenden gebildete Reinigungsfläche bezüglich ihrer Ausrichtung im wesentlichen unverändert verbleibt. Die Drehachse eines solchen Bürstenkopfes verläuft daher, wie in einem Ausführungsbeispiel vorgesehen, parallel zur Längserstreckung des den Bürstenkopf mit dem Griffstück verbindenden Schaftes. Durch diese Drehbewegung des Bürstenkopfes werden sämtliche Borsten des Bürstenkopfes gleichermaßen an der Oberfläche der zu reinigenden Zähne entlang bewegt, was sich nicht nur günstig auf eine gleichmäßige Abnutzung der einzelnen Borsten sondern auch auf ein gleichmäßiges Putzen auswirkt. Durch die Bewegung des Bürstenkopfes und die dementsprechende Verlagerung der Ebene der Bürstenenden auf der vorgegebenen Kreisbahn wird der Bürstenkopf beim Putzen bei jeder Kreisbewegung einmal von der Oberfläche der Zähne abgehoben, an einer anderen Stelle wieder angelegt, an der Zahnoberfläche entlang bewegt und wiederum abgehoben. Dies hat zum Vorteil, daß zum einen eine Putzbewegung in einer linearen Richtung möglich ist und daß durch das Abheben gelöste bzw. gelockerte Speisereste durch den Schaum eines Zahnputzmittels von der Bürste weggeschwemmt werden können. Diese Reinigungsbewegung ist zweckmäßigerweise so vorgesehen oder durch Einstellen die Drehrichtung des Bürstenkopfes vorgebbar ist, so daß der Bürstenkopf unabhängig von der Orientierung der Zahnbürste vom Zahnfleisch weg bewegt wird. Ein Zähneputzen mit einem auf diese Weise bewegten Bürstenkopf ist besonders Zahnfleisch schonend.

Durch das Ausüben der rotatorischen Drehbewegung des Bürstenkopfes ist die Endergieausbeute einer zur Verfügung stehenden Spannungsquelle erhöht, da im Gegensatz zu Bürstenköpfen mit einer oszillierenden Drehbewegung keine Totpunkte überwunden werden müssen. Folglich ist auch die Antriebskraft größer, so daß zum Aufbringen derselben Leistung auch ein weniger starker Elektromotor eingesetzt werden kann.

Ein solcher Bürstenkopf läßt sich zweckmäßig durch einen Kurbelantrieb antreiben, wobei der Bürstenkopf selber in einer Stempelführung gelagert sein kann, so daß dieser bei einem Antrieb die gewünschte rotatorische Drehbewegung ausübt.

Zweckmäßigerweise ist in dem Griffstück ein Schalter angeordnet, daß der Bürstenkopf sowohl in die eine als auch in die entgegengesetzte Richtung angetrieben werden kann.

In einer zweckmäßigen Weiterbildung ist der Bürstenkopf zusätzlich eine oszillierende Bewegung ausübend ausgestaltet.

Weitere Vorteile und Ausgestaltungen der Erfindung sind Bestandteil weiterer Unteransprüche sowie der nachfolgenden Beschreibung von zwei Ausführungsbeispielen unter Bezugnahme auf die beigefügten Figuren. Es zeigen:
- **Fig. 1:**: Eine schematisierte Frontansicht auf einen Bürstenkopf einer elektrischen Zahnbürste gemäß einem ersten Ausführungsbeispiel,
- **Fig. 2:**: Einen Längsschnitt durch die Anordnung der Figur 1 entlang der Linie A-B
- **Fig. 3:**: Eine schematisierte Darstellung des Bürstenkopfes einer elektrischen Zahnbürste gemäß einem weiteren Ausführungsbeispiel,
- **Fig. 4:**: Eine schematisierte Seitenansicht des Bürstenkopfes der Figur 3,
- **Fig. 5:**: Eine schematisierte Rückansicht auf einen Bürstenkopf einer elektrischen Zahnbürste gemäß einem weiteren Ausführungsbeispiel in einer ersten Bewegungsstellung und
- **Fig. 6:**: Der Bürstenkopf der elektrischen Zahnbürste der Figur 5 in einer weiteren Bewegungsstellung.

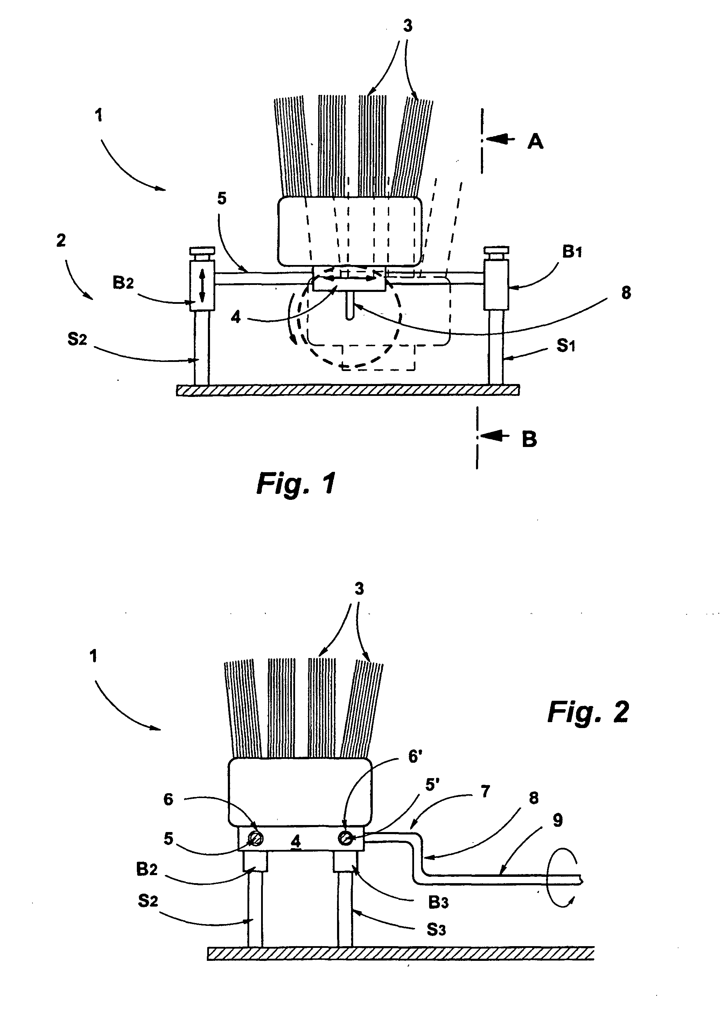

Der Bürstenkopf 1 einer nicht näher dargestellten elektrischen Zahnbürste ist in einer Stempelführung 2 bewegbar gelagert. Der Bürstenkopf 1 trägt eine Reihe von Borstenbüscheln 3, deren oberer Abschluß eine Ebene E definiert. Unterseitig ist der Bürstenkopf 1 auf einer Platte 4 befestigt, die in Querrichtung verschieblich auf zwei parallel zueinander angeordneten Führungsstangen 5, 5' gehalten ist. In Figur 1 ist lediglich die Führungsstange 5 erkennbar; die Führungsstange 5, 5' liegt fluchtend hinter der Führungsstange 5. Die Führungsstange 5, 5' sind, wie aus Figur 2 ersichtlich, in zwei in die Platte 4 eingebrachten Buchsen 6, 6' gelagert, so daß die Platte 4 in Längserstreckung der Führungsstangen 5, 5' längsverschiebbar ist wie dies durch den Doppelpfeil der Figur 1 angedeutet ist. Die freien Enden der Führungsstangen 5, 5' sind an jeweils in einer Buchse B₁ - B₃ gehalten, die ihrerseits in vertikaler Richtung verschiebbar - wie durch den Doppelpfeil der Figur 1 bezüglich der Buchse B₂ angedeutet - auf jeweils einem Stempel S₁ - S₃ gelagert sind. Insgesamt umfaßt die Anordnung der Figur 1 vier Stempel, wobei aufgrund der Darstellung lediglich drei Stempel S₁- S₃ erkennbar sind.

In die Platte 4 eingreifend ist das Abtriebsende 7 einer Kurbel 8, die in nicht näher dargestellter Weise elektromotorisch angetrieben ist. Die Kurbel 8 erstreckt sich mit ihrer Antriebswelle 9 durch den in den Figuren nicht näher dargestellten Schaft der elektrischen Zahnbürste bis in das Griffstück. Dabei kann vorgesehen sein, daß der Schaft von dem Griffstück lösbar ist und entsprechend eine Kuppfung in dem Antriebsstrang angeordnet ist. Bei einem Antrieb der Kurbel 8 wird die Platte 4 in einer Kreisbahn versetzt, die in Figur 1 gestrichelt dargestellt ist. Durch die Stempelführung der Platte 4 bzw. des Bürstenkopfes 1 bleibt die Ausrichtung des Bürstenkopfes 1 sowie der Ebene der Borstenenden E in der in Figur 1 gezeigten Ausrichtung, so daß auch die Ebene der Borstenenden E eine solche Kreisbewegung mitmacht, ohne daß der Bürstenkopf 1 verkippt. Die Folge ist, daß durch die Borsten 3 Zähne gleichmäßig gereinigt werden.

Der Bürstenkopf 1 ist reversibel antreibbar, so daß in Abhängigkeit von der Stellung des Bürstenkopfes 1 zum Zahnfleisch in jedem Fall eine Reinigungsbewegung vom Zahnfleisch weg durchgeführt werden kann. Dabei werden alle Borsten 3 gleichermaßen an der Zahnoberfläche vorbei bewegt, so daß mit dem vorbekannten Stand der Technik in der gesamten Ebene E der Borstenenden eine gleiche Reinigungswirkung erzielt wird.

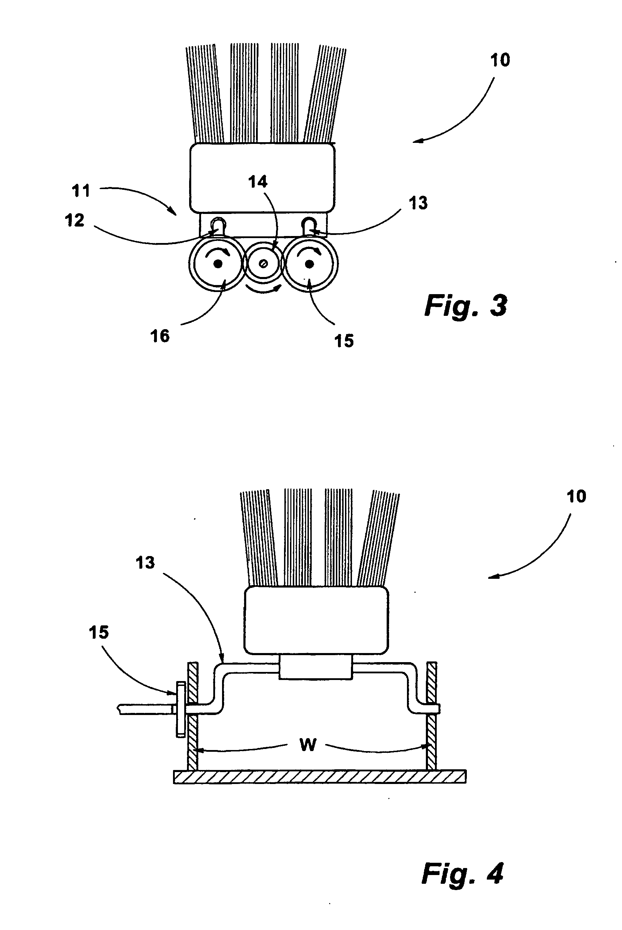

Die Figuren 3 und 4 zeigen ein weiteres Ausführungsbeispiel der Erfindung, bei dem der Bürstenkopf 10 auf einer Doppelkurbelanordnung 11 gelagert ist. Die Doppelkurbelanordnung 11 besteht aus zwei einzelnen Kurbeln 12, 13, die gleichermaßen angetreiben sind. Die Kurbeln 12, 13 sind in jeweils einer Wand W gelagert. Angetrieben sind die Kurbeln 12, 13 durch ein Antriebszahnrad 14, welches an dem Abtriebsende einer Antriebswelle angeordnet ist, und welches zwei gleiche, an den Kurbeln 12 bzw. 13 angeordnete Zahnräder 15, 16 antreibt. Bei einem Antrieb des Antriebsrades 14 werden die Zahnräder 15, 16 in eine gleiche Drehbewegung versetzt, so daß der Bürstenkopf 10 eine Figur 1 entsprechende Bewegung ausübt.

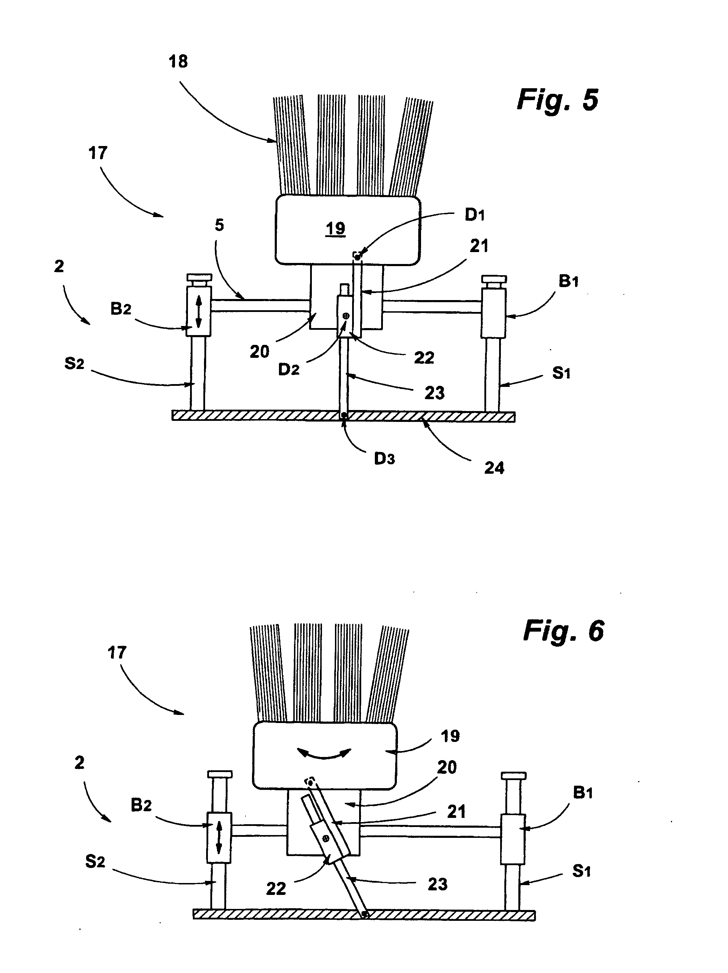

Figur 5 zeigt einen weiteren Bürstenkopf 17 einer elektrischen Zahnbürste, der in einer Stempelführung entsprechend der Stempelführung 2 gelagert ist. Daher ist die Stempelführung 2 mit denselben Bezugszeichen wie die Stempelführung der Figuren 1 und 2 gekennzeichnet. Bei dem Bürstenkopf 17 ist der die Borstenbüschel 18 tragende Kopf 19 gegenüber der Platte 20 in nicht näher dargestellter Art und Weise drehbar gelagert. Die Drehachse des Kopfes 19 gegenüber der Platte 20 verläuft in vertikaler Richtung. Von unten in den Kopf 19 eingreifend und schwenkbar mit diesem verbunden ist eine Gelenkstange 21. Die Gelenkstange 21 trägt unterseitig eine Hülse 22. Die Gelenkstange 21 mit der angeformten Hülse 22 ist sowohl schwenkbar am Kopf 19 als auch schwenkbar an der Platte 20 angelenkt. Die jeweiligen Drehachsen sind in Figur 5 mit den Bezugszeichen D₁, D₂ gekennzeichnet. Um eine Drehbewegung des Kopfes 19 gegenüber der Platte 20 zu gestatten, ist die Gelenkstange 21 mit Spiel in vertikaler Richtung an der Drehachse D₁ angebunden. Die Hülse 22 durchgreift eine zweite Gelenkstange 23, die an der Bodenplatte 25 der gezeigten Anordnung in der Drehachse D₃ angelenkt ist. Eine Bewegung des Bürstenkopfes 17 in vertikaler Richtung hat durch die Festlegung der Gelenkstange 23 und ihr Eingreifen in die Hülse 22 zur Folge, daß entsprechend dieser Bewegung bzw. des vektoriellen Anteils der Bewegung bei einer Bewegung des Bürstenkopfes 17 entlang seiner Kreisbahn, daß der Kopf 19 zwangsläufig gegenüber der Platte 20 um einen bestimmten Drehwinkelbetrag gedreht wird. Der Bürstenkopf 17 wird somit bei einem Betrieb der elektrischen Zahnbürste zusätzlich in eine oszillierende Bewegung versetzt, wie dies durch die weitere Bewegungsdarstellung der Figur 6 gezeigt ist.

Aus der Beschreibung der beanspruchten elektrischen Zahnbürste wird deutlich, daß mit dieser eine besonders effektive Reinigungsbewegung des Bürstenkopfes bei einer rotatorischen Drehbewegung erzielt wird.

Diese neuartige Bürstenkopfbewegung wirkt sich auch günstig auf die Selbstreinigung des Bürstenkopfes bei seiner bestimmungsgemäßen Benutzung auf. Diese Bürstenkopfbewegung kann ebenfalls ausgenutzt werden, um mit der elektrischen Zahnbürste eine wirkungsvolle Zahnfleischmassage durchführen zu können.

### Zusammenstellung der Bezugszeichen

- 1: Bürstenkopf
- 2: Stempelführung
- 3: Borstenbüschel
- 4: Platte
- 5, 5': Führungsstange
- 6, 6': Buchse
- 7: Abtriebsende
- 8: Kurbel
- 9: Antriebswelle
- 10: Bürstenkopf
- 11: Doppelkurbelanordnung
- 12: Kurbel
- 13: Kurbel
- 14: Antriebsrad
- 15: Zahnrad
- 16: Zahnrad
- 17: Bürstenkopf
- 18: Borstenbüschel
- 19: Kopf
- 20: Platte
- 21: Gelenkstange
- 22: Hülse
- 23: Gelenkstange
- 24: Bodenplatte

- E: Ebene der Borstenenden
- D₁-D₃: Drehachse
- B₁-B₃: Buchse
- S₁ -S₃: Stempel
- W: Wand

## Patentansprüche

1. Elektrische Zahnbürste mit einem drehbar gelagerten, über einen Schaft mit einem Griffstück verbundenen Bürstenkopf (1, 10, 17), **dadurch gekennzeichnet, daß** der Bürstenkopf (1, 10, 17) dergestalt gelagert ist, daß dieser bei einem Antrieb eine rotatorische Drehbewegung entlang einer Kreisbahn ausführt, wobei die Drehachse des Bürstenkopfes (1, 10, 17) parallel zur Ebene (E) der Borstenenden des Bürstenkopfes (1, 10, 17) verlaufend angeordnet ist und die Ebene (E) der Borstenenden infolge der Lagerung des Bürstenkopfes (1, 10, 17) bei der rotatorischen Drehbewegung ihre Ausrichtung beibehält.

2. Zahnbürste nach Anspruch 1, **dadurch gekennzeichnet, daß** der Bürstenkopf (1, 17) durch einen Kurbelantrieb zum Bewegen desselben in seiner rotatorischen Drehbewegung angetrieben ist.

3. Zahnbürste nach Anspruch 1 oder 2, **dadurch gekennzeichnet, daß** der Bürstenkopf (1, 17) in einer Stempelführung (2) gelagert ist.

4. Zahnbürste nach Anspruch 1, **dadurch gekennzeichnet, daß** der der Bürstenkopf (10) durch zwei parallel zueinander angeordnete gleichermaßen angetriebene Kurbeln (12, 13) angetrieben ist.

5. Zahnbürste nach einem der Ansprüche 1 bis 4, **dadurch gekennzeichnet, daß** der die Borstenbüschel (18) tragende Kopf 19 des Bürstenkopfes (17) bei einem Betrieb der Zahnbürste eine oszillierende Drehbewegung um eine senkrecht zur Drehachse des Bürstenkopfes (17) verlaufende Drehachse ausübt.

6. Zahnbürste nach Anspruch 5, **dadurch gekennzeichnet, daß** der Kopf (19) mit der den Kopf (19) tragenden Platte (20) durch eine Gelenkstange (21) verbunden ist, die schwenkbar am Kopf (19) sowie an der Platte (20) angeordnet ist und daß diese Gelenkstange (21) eine Hülse (22) trägt, durch die eine weitere Gelenkstange (23) durchgreift, die ihrerseits ortsfest schwenkbar festgelegt ist.

## Claims

1. Electric toothbrush having a rotatably mounted brush head (1, 10, 17) which is connected to a handle unit by a shaft, **characterised in that** the brush head (1, 10, 17) is mounted in such a way that, when driven, it performs a rotary motion along a circular path, the axis of rotation of the brush head (1, 10, 17) being arranged to extend parallel to the plane (E) of the bristle ends of the brush head (1, 10, 17) and the plane (E) of the bristle ends maintaining its alignment during the rotary motion as a result of the mounting of the brush head (1, 10, 17).

2. Toothbrush according to claim 1, **characterised in that** the brush head (1, 17) is driven by a crank mechanism to move said head in its rotary motion.

3. Toothbrush according to claim 1 or 2, **characterised in that** the brush head (1, 17) is mounted in a piston guide (2).

4. Toothbrush according to claim 1, **characterised in that** the brush head (10) is driven by two equally driven cranks (12, 13) which are arranged parallel to one another.

5. Toothbrush according to one of claims 1 to 4, **characterised in that,** when the toothbrush is operated, the top (19), which bears the tufts of bristles (18), of the brush head (17) performs an oscillating rotary motion about an axis of rotation extending perpendicular to the axis of rotation of the brush head (17).

6. Toothbrush according to claim 5, **characterised in that** the top (19) is connected to the plate (20) bearing the top (19) by a toggle link (21) which is pivotably arranged on the top (19) and on the plate (20), and **in that** this toggle link (21) bears a sleeve (22), through which a further toggle link (23) engages, which for its part is pivotably fixed in place.

## Revendications

1. Brosse à dents électrique avec une tête (1, 10, 17) logée de manière rotative, au-dessus d'une tige avec une poignée **caractérisée en ce que** la tête (1, 10, 17) est logée de telle sorte que celle-ci exécute, lors de son entraînement, un mouvement de rotation rotatif le long d'une trajectoire circulaire, l'axe de rotation de la tête (1, 10, 17) étant disposé pour suivre de manière parallèle le plan (E) des extrémités des poils de la tête (1, 10, 17) et le plan (E) des extrémités des poils conservant leur orientation en raison de la fixation de la tête (1, 10, 17) lors du mouvement de rotation rotatif.

2. Brosse à dents selon la revendication 1 **caractérisée en ce que** la tête (1, 17) est entraînée par un mécanisme à bielle et manivelle afin de déplacer celle-ci selon un mouvement de rotation rotatif.

3. Brosse à dents selon la revendication 1 ou 2 **caractérisée en ce que** la tête (1, 17) est logée dans un guidage à poinçons (2).

4. Brosse à dents selon la revendication 1 **caractérisée en ce que** la tête (10) est entraînée par deux manivelles (12, 13) disposées en parallèle et entraînées de la même manière.

5. Brosse à dents selon l'une des revendications 1 à 4 **caractérisée en ce que** la tête 19 supportant les touffes de poils (18) de la tête (17) effectue, lors d'un fonctionnement de la brosse à dents, un mouvement de rotation oscillant sur un axe de rotation s'étendant perpendiculairement à l'axe de rotation de la tête (17).

6. Brosse à dents selon la revendication 5 **caractérisée en ce que** la tête (19) est raccordée à la plaque (20) supportant la tête (19) par une tige d'articulation (21), disposée de manière pivotante sur la tête (19) ainsi que sur la plaque (20) et que cette tige d'articulation (21) supporte un manchon (22), traversé par une autre tige d'articulation (23), laquelle est pour sa part placée de manière pivotante à un endroit fixe.
